# EUROPEAN PATENT SPECIFICATION

(11) **EP 0 639 732 B1**
(45) Date of publication and mention of the grant of the patent: **11.11.1998**
(21) Application number: 94202283.1
(22) Date of filing: 08.08.1994
(51) Int. Cl.: F16H 61/00

(54) **Continuously variable transmission**
Stufenloses Getriebe
Transmission à variation continue

(30) Priority: 17.08.1993 NL 9301418
(43) Date of publication of application: 22.02.1995
(73) Proprietor: Van Doorne's Transmissie B.V., NL-5000 AM Tilburg (NL)
(72) Inventor: van Wijk, Wilhelmus Johannes Maria, NL-5071 AN Udenhout (NL); Roovers, Wilhelmus Cornelus Waltherus Maria, NL-4841 HE Prinsenbeek (NL); Choi, Chi Chung, NL-5627 ES Eindhoven (NL); d'Herripon, Bastiaan Andreas, NL-5025 GD Tilburg (NL); Hendriks, Emery Frederik Marie, NL-5591 MR Heeze (NL)
(74) Representative: de Bruijn, Leendert C.

(56) References cited:
- EP-A- 0 377 953
- WO-A-93/00533
- DE-A- 3 731 487
- US-A- 4 735 112
- US-A- 5 092 198

## Description

The invention is related to a continuously variable transmission as defined by the features of the preamble of claim 1.

Such a continuously variable transmission is known from WO-A-9300533.

The object of the invention is to provide an improved transmission. This object is achieved by the features of claim 1.

According to a preferred embodiment, the first control valve is set in a leakage-compensating condition.

According to a preferred embodiment, the continuously variable transmission may further comprise a second control valve disposed in a hydraulic line between the first control valve and the piston-cylinder unit of the first pulley and operable to shut off said hydraulic line, and an ON/OFF solenoid to control said second control valve at specified other operating conditions.

In a further embodiment of the transmission according to the invention, the first and/or second control valve is also in the form of a safety valve, in such a way that if there is a power failure the supply and/or discharge of medium from the first control valve to the piston-cylinder unit is interrupted and the transmission ratio of the transmission can change only gradually.

According to the invention, the second control valve can also be designed as a reversing block, in such a way that at forward vehicle speeds above a predetermined value any control signal for the activation of a reversing mechanism is blocked. For this purpose, in one embodiment a control signal for the activation of a reversing mechanism can be conveyed through the second control valve, and the second control valve is provided with an input for a signal corresponding to or as a measure for the vehicle speed. The first and/or second control valve can also be designed as a speed limiter.

In particular, the continuously variable transmission according to the invention is designed in such a way that the transmission ratio is kept essentially constant in the event of an emergency stop, when travelling on inclines, and when travelling in bends.

According to the invention, an emergency stop situation can be diagnosed, inter alia, if the difference between the desired value and the measured value of the input speed of the transmission exceeds a predetermined value and the vehicle speed falls below a predetermined value. On the other hand, the diagnosis of an emergency stop situation in the transmission can be cancelled if the desired and the measured value of the input speed of the transmission are approximately equal again. The transmission is thus controlled to low speeds in emergency stop situations, with the result that in particular when driving off again internal slip in the transmission is largely overcome, and it is possible to drive off without shocks.

In a further development of the invention, the transmission is designed in such a way that if the input speed of the transmission exceeds a value to be set, the transmission ratio of the transmission is kept essentially constant until said speed has again fallen below the set value. In this way it is possible to prevent the transmission and the engine coupled thereto from being driven at an unacceptably high speed, and damage is thus prevented, and a potentially dangerous situation avoided.

Fuzzy logic and/or neural networks can also be used.

The invention will be explained with reference to a drawing, in which:
Figure 1 shows diagrammatically a continuously variable transmission according to the invention, provided with a first and a second control valve, and also a solenoid;
Figure 2 shows (a) a variogram of the transmission during travel in bends, (b) on inclines, (c) in the case of an emergency stop, and (d) during r.p.m. limiting;
Figure 3 shows a continuously variable transmission according to the invention, with a first control valve and a feedback loop according to the invention; and
Figure 4 shows (a) a control unit for the second control valve, with state diagram, (b) also provided with an S/R flipflop with state diagram.

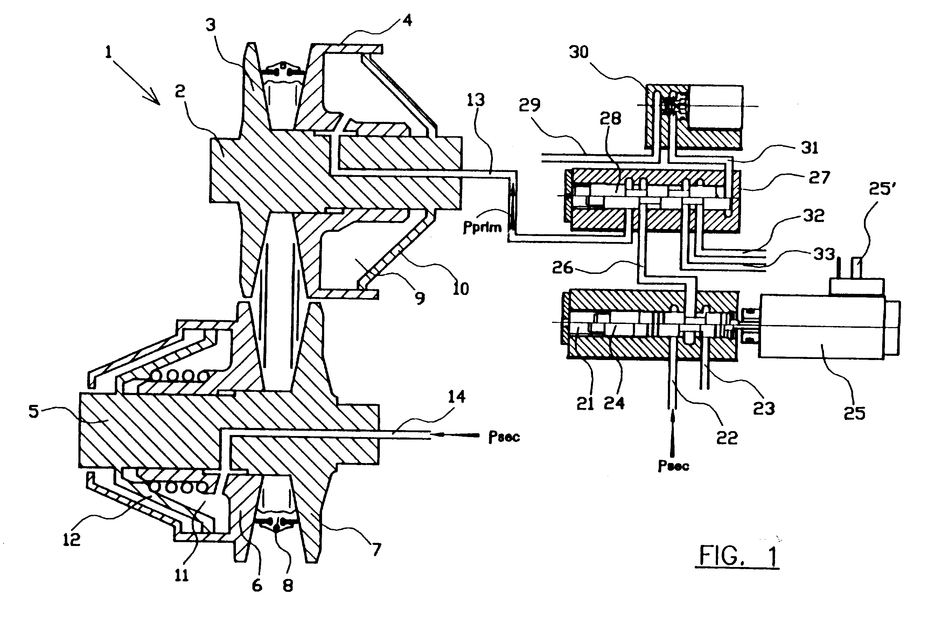

The continuously variable transmission 1 shown diagrammatically in Figure 1 comprises a primary pulley fitted on the shaft 2 and having sheaves 3 and 4. The shaft 2 is coupled to, for example, the engine (not shown) of a motor vehicle. A secondary pulley with sheaves 6 and 7 is disposed on a shaft 5. The shaft 5 is coupled to, for example, the wheels of a motor vehicle (not shown). A drive belt 8 is disposed between the sheaves 3, 4 of the primary pulley and the sheaves 6, 7 of the secondary pulley. The transmission ratio of the transmission can be varied by varying the radial position of the drive belt 8 between the sheaves 3, 4 and 6, 7, respectively. For this purpose, the sheaves 4 and 6 are disposed displaceably on the shafts 2 and 5, respectively, and are provided with piston-cylinder units 9, 10 and 11, 12, respectively, which can produce a movement of the displaceable sheaves. The piston-cylinder units 9, 10 and 11, 12 are provided with supply and discharge lines 13, 14, respectively, for the supply and discharge of (hydraulic) medium. A so-called secondary pressure P_{sec} is generally supplied through the line 14, which secondary pressure causes the drive belt to be clamped to a sufficient extent between the pulleys. A so-called primary pressure Pₚᵣᵢₘ is then supplied through the line 13, which primary pressure controls the transmission ratio of the transmission. Otherwise, the continuously variable transmission can also be controlled in another way (e.g. by means of an electric motor), and the invention is not restricted to the type of continuously variable transmission shown in Figure 1.

The way in which the continuously variable transmission shown works is assumed to be known in the description which follows.

The secondary pressure P_{sec}, supplied through line 14 for clamping the drive belt 8 between the pulleys, is also supplied to a first control valve 21 through line 22. The first control valve 21 with disc 24 in this case controls the primary pressure Pₚᵣᵢₘ which is being discharged through line 26. The secondary pressure P_{sec} and/or the primary pressure Pₚᵣᵢₘ may be blown off by means of line 23 if desired. The first control valve in this case is electronically controlled by the electronic control unit 25, which can move disc 24 in the first control valve 21. The electronic control unit 25 is provided with an electrical connection 25¹ to which signals can be fed, depending on a large number of variables representing the operating conditions of the transmission and the vehicle. For this reference is made inter alia, to EP-A-595 793 published on 04/05/94 and EP-A-451 887 published on 16/10/91.

The primary pressure Pₚᵣᵢₘ is supplied through line 26, a second control valve 27 and line 13 to the primary pulley with the piston-cylinder unit 9, 10.

Depending on the position of disc 28 in the second control valve 27, the connection between the lines 26 and 13 is opened or shut. In the open position, the first control valve 21 controls the primary pressure Pₚᵣᵢₘ, but in the closed position no discharge and supply of (hydraulic) medium can be possible from and to the piston-cylinder unit, and the transmission ratio of the transmission according to the invention is thus kept essentially constant. Keeping the transmission ratio essentially constant has a large number of advantages in operating conditions to be defined in more detail, such as when travelling in bends and on inclines, during emergency stops and at runaway speed of the transmission. These operating conditions mentioned here specifically will be discussed below in more detail.

A large number of parameters, or derivatives thereof, can be used for determinating the operating conditions in which the transmission ratio must be kept constant. They include the primary speed of shaft 2, the engine speed, the accelerator position, the accelerator speed, the vehicle speed, the braking force, the position of the brake pedal, transverse and/or longitudinal accelerations, gradients, a driver command, steering position and wheel position of the vehicle. On the basis of the measured parameters, it can be decided whether an operating condition exists in which the transmission ratio should be kept constant. On the basis thereof, a signal can be given to the second control valve 27 in this case, in such a way that the primary pressure Pₚᵣᵢₘ is kept essentially constant, or in such a way that the flow rate of hydraulic medium to the piston-cylinder unit is kept essentially constant. Fuzzy logic or neural networks in particular can also be used here.

The signal fed in this embodiment to the second control valve 27, in order to open it or not to open it, consists of a hydraulic signal in line 31 and coming from a line 29, a solenoid 30 being placed between the lines 29 and 31. Said solenoid 30 is electronically controlled and is excited or not excited depending on the operating conditions. If the operating conditions are such that the transmission ratio needs to be regulated normally, and need not necessarily be essentially constant, the solenoid 30 will keep the connection between the lines 29 and 31 open, the disc 28 of the first control valve will move to the left, and the lines 26 and 13 for the primary pressure Pₚᵣᵢₘ will be in connection with each other. However, if the operating conditions are such that the transmission ratio must be kept constant according to the invention, the solenoid 30 will break the connection between the lines 29 and 31, and the disc 28 of the second control valve 27 will slide to the right, with the result that the connection between the lines 26 and 13 is broken. The primary pressure Pₚᵣᵢₘ in line 13, or the flow rate, consequently remains essentially constant, and the transmission ratio will consequently also remain essentially constant.

Since some leakage will generally occur in line 13 and the piston-cylinder unit 9, 10, the solenoid 30 can be provided with a pulse-width modulator (PWM). The result of this is that the second control valve will always be opened briefly, in such a way that the leakage can be compensated for.

The second control valve 27 is also provided with connections for the lines 32 and 33. Line 33 conducts an excitation signal for a reversing mechanism (not shown). At excessive forward speeds of the vehicle and the transmission, for safety reasons and in order to prevent damage to the transmission, the reversing mechanism must not be actuated. The second control valve 27 then is designed in such a way that at forward speeds above a certain value, e.g. 7 k.p.h., the connection between lines 32 and 33 is broken. This measures ensures that in the event of incorrect actuation at excessive high speeds, the signal from line 32 will not be passed to line 33 and the reversing mechanism.

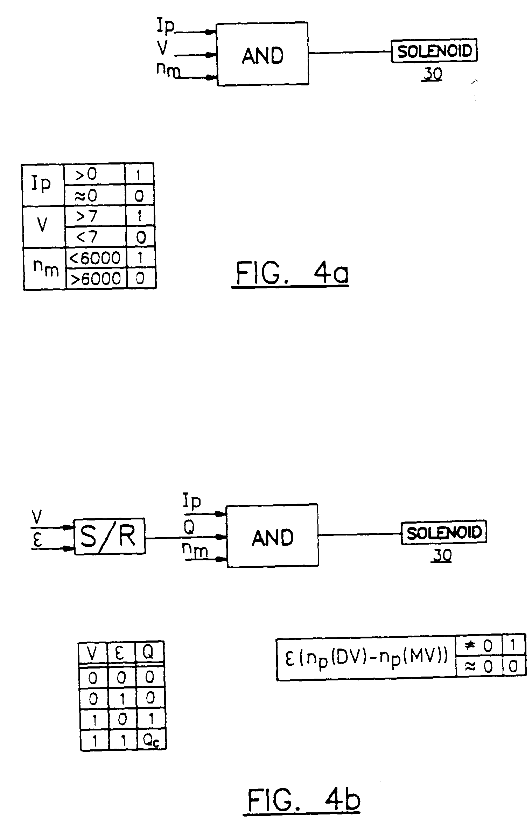

Figure 4a shows diagrammatically an electronic control system for the solenoid 30. Connected up stream of the solenoid 30 there is an AND gate, to which signals containing a measure for the vehicle speed v, the engine speed Nm and the excitation signal lₚ, which is also fed to input 25¹ of the electronic unit 25, are fed. According to the state diagram, of which an example is shown, the solenoid will be excited if three conditions are met: the exciting current lₚ must be greater than 0, the vehicle speed must be greater than 7 k.p.h., and the engine speed must be lower than 6,000 r.p.m. This circuit ensures that the transmission ratio is kept constant or will only change gradually at low speeds, at a dangerously high speed, and in case of a cable break.

In Figure 4b, by comparison with the electronic control system for the solenoid 30 shown in Fig. 4a, the signal V as a measure for the vehicle speed is replaced by a signal Q coming from an S/R flipflop. The S/R flipflop in this case sets a signal Q to zero or 1, or maintains the old state Qc as a function of the vehicle speed V and ε, as a measure for the difference between the desired Nₚ (DV) and measured Nₚ (MV) values of the input speed of the transmission.

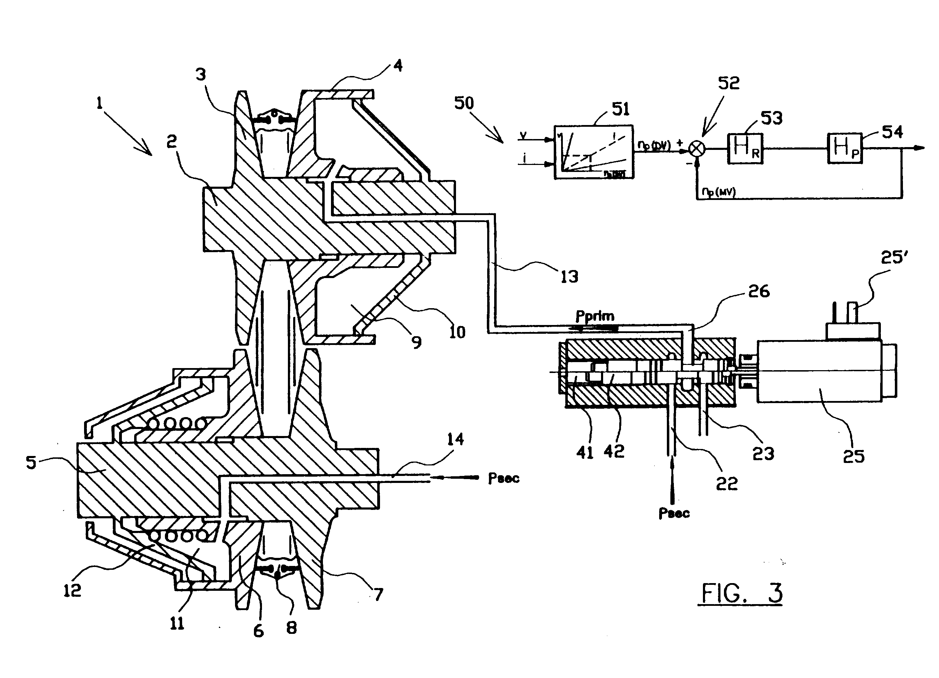

Figure 3 shows a continuously variable transmission which largely corresponds to that shown in Figure 1. Corresponding parts are indicated by corresponding reference numbers, but in the embodiment shown in Figure 3 there is just one first control valve 41 with disc 42. The line 26 in this case is directly connected to line 13 and to the piston-cylinder unit 9, 10.

A constant transmission ratio in the operating conditions to be defined is therefore fully controlled here by the first control valve 41, which for that purpose by means of disc 42 shuts off the connection between line 22 with the secondary pressure P_{sec} and said line 26 for the primary pressure Pₚᵣᵢₘ. On account of the natural leakage from line 26 and the piston-cylinder unit 9, 10, the valve 42 can also set to a wire-drawing condition, so that, by limited leakage from line 22 to line 26 the above-mentioned leakage can be compensated for.

In order to control an essentially constant transmission ratio, the transmission 1 can be provided with a feedback loop 50. The feedback loop comprises an arithmetic unit 51, which on the basis of the measured vehicle speed V and the currently desired transmission ratio i determines the desired input speed Nₚ (DV) of the transmission. The signal Nₚ (DV), like the measured input speed Nₚ (MV), is fed to a difference former 52, the output difference signal of which is fed to a controller 53, the output signal of which is passed to a setting device 54 with a suitable transfer function, which with the electronic control unit 25, 25¹ sets the first control valve 41. The resulting measured value of the input speed Nₚ (MV) is, as said before, fed to the difference former 52.

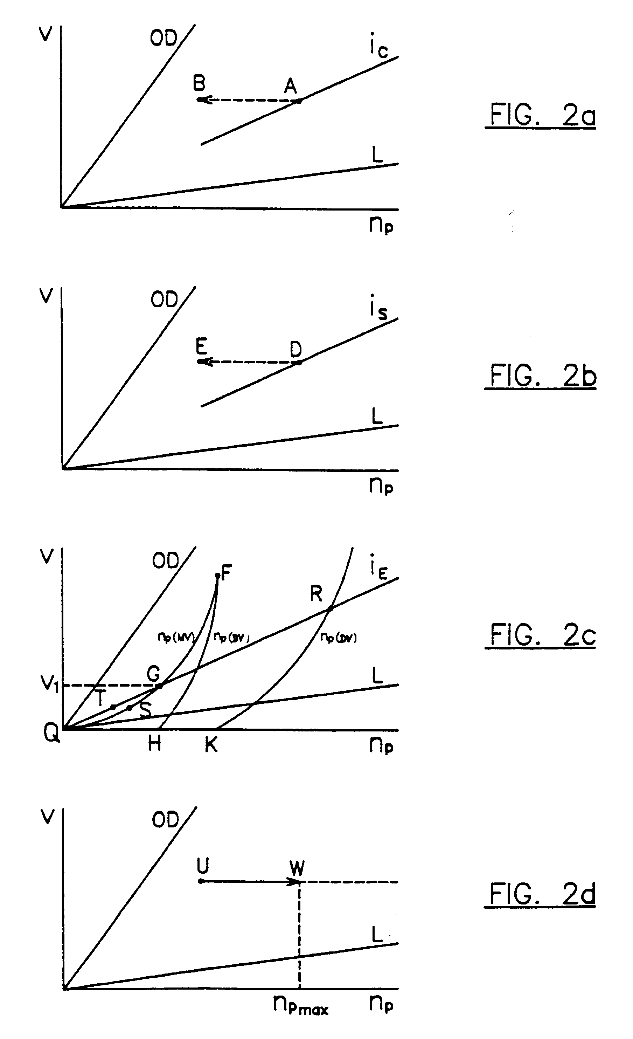

The effect of the use of the method and the transmission according to the invention will be discussed below and compared with the prior art, with reference to Figure 2, for a number of possible operating conditions to be defined, for which the transmission ratio is preferably kept essentially constant. For this purpose, Figure 2 gives so-called variograms as a function of the vehicle speed V and the input speed Nₚ of the transmission. The lines L (low) and OD (overdrive) determine the limits within which the transmission can be regulated. The transmission ratio is constant on a straight line through the origin.

Figure 2a shows travel through bends. If, for example, a bend is being approached in operating point A and the driver eases off the accelerator a little, the transmission according to the prior art will change down back to point B. Owing to the mass inertia, this change-down will be experienced by the driver as a push in his back, and no engine-braking effect will be obtained. The prior art consequently does not provide the optimum driving comfort. However, if according to the invention the transmission ratio is kept essentially constant during negotiation of a bend from A, the transmission will be regulated along the line i_{c}. As a result, a change-down push will be avoided and an engine-braking effect obtained. Moreover, after the bend, torque will be available more quickly at the correct transmission ratio. Suitable parameters for defining the operating condition "bend" include the brake pedal position, the accelerator position, the accelerator speed, transverse and longitudinal accelerations, and the steering and wheel positions.

Figure 2b shows driving down an incline. If, for example, an incline is being driven down from operating point D, the driver will ease off the accelerator a little, in order to reduce speed. According to the prior art, the transmission will change to operating point E. Here again, a push is experienced, and no engine-braking effect occurs. If according to the invention, the transmission ratio is now kept essentially constant along line iₛ from point D while driving down an incline, an engine-braking effect is indeed obtained, and an inertia push is avoided. Driving down an incline consequently becomes considerably more comfortable. In this case it may also be practical to regulate the output speed of the transmission. Suitable parameters for defining the operating condition "incline" include the accelerator position, longitudinal accelerations, brake pedal position, gradients, change in centre of gravity and power ratio of front and rear axle.

Figure 2c shows the situation during an emergency stop. If, for example, the driver brakes sharply in point F, the vehicle speed will drop very quickly, in such a way that the control unit cannot follow the desired line FH for the input speed, and proceeds along the line FG/SO. In point 0 the clamping stress of the pulleys on the drive belt decreases considerably. After an emergency stop the vehicle must be able to drive off again quickly. This driving off follows the line OKR. However, since the clamping stress of the pulleys on the drive belt has decreased considerably in point 0, said stress cannot be built up quickly enough when driving off, with the result that the drive belt may slip, and this may result in considerable wear on and/or damage to the drive belt and pulleys. Moreover, driving off is accompanied by a shock at the moment when the drive belt is placed under sufficient stress. However, according to the invention, below a certain vehicle speed V₁ the transmission ratio is now kept constant in case of an emergency stop. The transmission ratio in this case is regulated from point G (at V₁) along the line GTO, and the drive belt consequently remains under stress even in point 0. When the vehicle is driven off again, the drive belt will thus not be able to slip, and damage and wear will be prevented, while no shock will be felt either. When the vehicle is driven off the transmission is regulated along line OTGR. Not until point R, where the desired input speed Nₚ (DV) and the measured speed Nₚ (MV) are equal again, is the imposition of the constant transmission ratio lifted, and the transmission can be freely regulated again. Suitable parameters for defining an operating condition "emergency stop" are the brake pedal and accelerator position, accelerations, measured input speed, and the difference between the measured and the desired input speed of the transmission.

Finally, Figure 2d shows the situation during speed limitation. For example, if in operating point N the transmission suddenly begins to speed up uncontrollably, for example through a fault in the electronic control system, the speed is in danger of exceeding an acceptable speed, which may lead to considerable damage. Although the speed limitation can to some extent raise the speed of the transmission, the speed are limited to a maximum Nₚₘₐₓ in operating point W, in such a way that no damage can occur and safety is not at issue. Moreover, the driver can also decide himself to keep the transmission ratio essentially constant by giving an appropriate command by suitable means.

## Claims

1. Continuously variable transmission, in particular for a motor vehicle, provided with control means to set the transmission ratio of the transmission, said control means
- comprising an electronic control unit (25) provided with inputs for signals corresponding at least to the vehicle speed and the current transmission ratio, and
- being designed such that on the basis of these signals in certain operating conditions an essentially constant transmission ratio is maintained while the input speed of the transmission is changing,
- said continuously variable transmission being provided with a primary pulley (3,4) and a secondary pulley (6, 7) having an endless drive belt (8) therebetween, each pulley having two sheaves, one of which is axially displaceable relative to the other sheave,
- said control means further comprising a hydraulic control system to adjust the relative position of each displaceable sheave via a piston-cylinder unit (9,10 and 11,12) and a control valve unit having a first control valve (21;41) to control the supply and discharge of medium to at least one piston-cylinder unit,
characterized in that
- said electronic control unit (25) comprises a feedback loop which in specified operating conditions, is connected to an arithmetic circuit (51) having as inputs said signals corresponding to said vehicle speed and said current transmission ratio and providing a desired input speed (Np(DV)) of the transmission,
- said electronic control unit (25) outputs a signal based on said desired input speed (Np(DV)) and a measured input speed (Np(MV) of the transmission to set the first control valve (21;41)
- said first control valve (21;41) is coupled to the piston-cylinder unit (9,10) of the primary pulley and is designed such that in said specified operating conditions, the valve maintains an essentially constant quantity of medium in said piston-cylinder unit so as to maintain said transmission ratio essentially constant.

2. Continuously variable transmission according to claim 1, wherein said first control valve is set in a leakage-compensating condition.

3. Continuously variable transmission according to Claim 1, comprising a second control valve (27) disposed in a hydraulic line (13) between the first control valve (21) and the piston-cylinder unit (9,10) of the primary pulley and operable to shut off said hydraulic line, and an ON/OFF solenoid (30) to control said second control valve at specified other operating conditions.

4. Continuously variable transmission according to Claim 3, wherein said specified other operating conditions are defined by travelling in bends and/or on inclines.

5. Continuously variable transmission according to Claim 3, wherein said specified other operating conditions are defined by an emergency stop and transmission runaway speed.

6. Continuously variable transmission according to Claim 1 and 2, wherein one or more of the following signals, used to define said specified operating conditions, are provided to said control means: accelerator position, accelerator speed, vehicle speed, engine speed, transmission input speed, braking force, position of the brake pedal, transverse and/or longitudinal accelerations, gradients, driver command, steering position and wheel position of the vehicle.

7. Continuously variable transmission according to one of Claims 3 or 5, wherein said second control valve (27) and/or said ON/OFF solenoid (30) is provided with a pulse-width modulator (PWM).

8. Continuously variable transmission according to Claims 3, 5 or 7, wherein said first and/or said second control valve is in the form of a safety valve, in such a way that if there is a power failure the supply and/or discharge of medium from the first and/or second control valve to the piston-cylinder unit is interrupted and the transmission ratio of the transmission can only gradually change.

9. Continuously variable transmission according to any one of Claims 3, 5, 7 or 8, wherein said first and/or said second control valve is designed as a reversing block, so that at forward vehicle speeds above a predetermined value any control signal for activation of a reversing mechanism is blocked.

10. Continuously variable transmission according to Claim 9, wherein a control signal for activation of a reverse mechanism can be conveyed through said second control valve (27), and wherein said second control valve is provided with an input for a signal corresponding to or as a measure for the vehicle speed.

11. Continuously variable transmission according to Claim 3, 5, 7, 8, 9 or 10, wherein said first and/or said second control valve are designed as a speed limiter, in such a way that in case of an input speed of the transmission above a set value the supply and discharge of medium from the first control valve to the piston-cylinder unit is interrupted and the transmission ratio of the transmission can change only gradually.

12. Continuously variable transmission according to Claim 3, 5, 7, 8, 9, 10 or 11, wherein one or more of the following signals, or derivatives thereof, are fed to an AND gate connected for said ON/OFF solenoid (30) and are compared with corresponding values to be set: an exciting signal for the first control valve, the vehicle speed and the input speed of the transmission.

13. Continuously variable transmission according to Claim 12, wherein a signal is fed to said solenoid (30) from a set/reset flip-flop, the flip-flop being provided with inputs for a measure for the vehicle speed and a difference between the desired and the measured input speed of the transmission.

14. Continuously variable transmission according to any one of the preceding claims, wherein the transmission is designed in such a way that if the difference between the desired and the measured value of the input speed of the transmission exceeds a predetermined value and the vehicle speed falls below a predetermined value, the transmission ratio is kept essentially constant.

15. Continuously variable transmission according to claim 14, wherein the transmission ratio becomes variable if at a constant transmission ratio after an emergency stop the desired value and the measured value of the input speed of the transmission are approximately equal again.

16. Continuously variable transmission according to any one of the preceding claims, wherein the transmission is designed in such a way that if the input speed of the transmission exceeds a settable value, the transmission ratio of the transmission is kept essentially constant until said speed has fallen below the set value again.

17. Continuously variable transmission according to any one of the preceding claims, wherein the transmission is designed in such a way that the transmission ratio is influenced using fuzzy logic and/or using neural networks.

## Patentansprüche

1. Stufenloses Getriebe, insbesondere für ein Kraftfahrzeug, mit einem Regelungsmittel zur Einstellung des Übersetzungsverhältnisses des Getriebes, wobei das Regelungsmittel
- eine elektronische Regeleinheit (25) umfaßt, die Signaleingänge mindestens für die Fahrzeuggeschwindigkeit und das momentane Übersetzungsverhältnis aufweist und
- so beschaffen ist, daß auf Grundlage dieser Signale in bestimmten Betriebszuständen ein im wesentlichen konstantes Übersetzungsverhältnis aufrechterhalten wird, während die Eingangsdrehzahl des Getriebes sich verändert, und
- das stufenlose Getriebe eine erste Keilriemenscheibe (3, 4) und eine zweite Keilriemenscheibe (6, 7) mit einem endlosen Treibriemen (8) dazwischen aufweist, wobei jede Keilriemenscheibe zwei Scheiben besitzt, von denen eine relativ zu der anderen Scheibe axial verschiebbar ist,
- das Regelungsmittel weiterhin ein hydraulisches Regelsystem zur Einstellung der relativen Position jeder der verschiebbaren Scheiben mittels einer Kolben-Zylinder Einheit (9, 10 und 11, 12) umfaßt sowie eine Regelventil-Einheit, die ein erstes Regelventil (21; 41) aufweist, um die Zufuhr und Ableitung von Medium zu wenigstens einer Kolben-Zylinder Einheit zu regeln,
**dadurch gekennzeichnet, daß**
- die elektronische Regeleinheit (25) eine Rückkopplungsschleife umfaßt, die bei bestimmten Betriebszuständen mit einem arithmetischen Schaltkreis (51) verbunden ist, der Eingänge für die Signale aufweist, die der Fahrzeuggeschwindigkeit und dem momentanen Übersetzungsverhältnis entsprechen, und der eine gewünschte Eingangsdrehzahl (Np(DV)) des Getriebes bereitstellt,
- die elektronische Regeleinheit (25) ein Signal abgibt, das auf der gewünschten Eingangsdrehzahl (Np(DV)) und einer gemessenen Eingangsdrehzahl (Np(MV)) des Getriebes basiert und das erste Regelventil (21; 41) einstellt
- das erste Regelventil (21; 41) mit der Kolben-Zylinder Einheit (9, 10) der ersten Scheibe gekuppelt und so ausgelegt ist, daß in den genannten bestimmten Betriebszuständen das Ventil eine im wesentlichen konstante Menge Medium in der Kolben-Zylinder Einheit aufrechterhält, so daß das Übersetzungsverhältnis im wesentlichen konstant gehalten wird.

2. Stufenloses Getriebe gemäß Anspruch 1, **dadurch gekennzeichnet, daß** das erste Regelventil auf einen eine Leckage ausgleichenden Zustand eingestellt ist.

3. Stufenloses Getriebe gemäß Anspruch 1, **gekennzeichnet durch** ein zweites Regelventil (27), das in der Hydraulik-Leitung (13) zwischen dem ersten Regelventil (21) und der Kolben-Zylinder Einheit (9, 10) der ersten Keilriemenscheibe installiert ist, und so betätigbar ist, daß es die Hydraulik-Leitung verschließt, sowie eine ON/OFF Magnetspule (30) zur Regelung des zweiten Regelventils bei bestimmten anderen Betriebszuständen.

4. Stufenloses Getriebe gemäß Anspruch 3, **dadurch gekennzeichnet, daß** die bestimmten anderen Betriebszustände als Fahren in Kurven und/oder Gefällen definiert sind.

5. Stufenloses Getriebe gemäß Anspruch 3, **dadurch gekennzeichnet, daß** die bestimmten anderen Betriebszustände als Nothalt und Durchgehdrehzahl des Getriebes definiert sind.

6. Stufenloses Getriebe gemäß Anspruch 1 und 2, **dadurch gekennzeichnet, daß** eines oder mehrere der folgenden Signale, die zur Definition der bestimmten Betriebszustände verwendet werden, an die Regelungsmittel geleitet werden:
Stellung des Gaspedals, Gaspedalgeschwindigkeit, Fahrzeuggeschwindigkeit, Motordrehzahl, Getriebe-Eingangsdrehzahl, Bremskraft, Stellung des Bremspedals, transversale und/oder longitudinale Beschleunigungen, Gefälle, Fahrerbefehl, Lenkungseinstellung und Radposition des Fahrzeugs.

7. Stufenloses Getriebe gemäß einem der Ansprüche 3 oder 5, **dadurch gekennzeichnet, daß** das zweite Regelventil (27) und/oder die ON/OFF Magnetspule (30) mit einem Pulsweiten-Modulator (PWM) ausgestattet ist.

8. Stufenloses Getriebe gemäß Anspruch 3, 5 oder 7, **dadurch gekennzeichnet, daß** das erste und/oder das zweite Regelventil als ein Sicherheitsventil ausgestaltet ist, so daß im Falle eines Netzausfalls die Zufuhr und/oder Ableitung von Medium von dem ersten und/oder zweiten Regelventil zu der Kolben-Zylinder Einheit unterbrochen wird und das Übersetzungsverhältnis des Getriebes sich nur graduell ändern kann.

9. Stufenloses Getriebe gemäß einem der Ansprüche 3, 5, 7 oder 8, **dadurch gekennzeichnet, daß** das erste und/oder das zweite Regelventil als eine Rückfahrsperre ausgestaltet ist, so daß bei Fahrzeug-Vorwärtsgeschwindigkeiten oberhalb eines vorbestimmten Wertes jedes Regelsignal zur Aktivierung eines Rückfahrmechanismus blockiert ist.

10. Stufenloses Getriebe gemäß Anspruch 9, **dadurch gekennzeichnet, daß** ein Regelsignal zur Aktivierung eines Rückfahrmechanismus durch das zweite Regelventil (27) übermittelt werden kann, und das zweite Regelventil mit einem Eingang für ein Signal, das der Fahrzeuggeschwindigkeit entspricht oder ein Maß für diese ist, ausgestattet ist.

11. Stufenloses Getriebe gemäß Anspruch 3, 5, 7, 8, 9 oder 10, **dadurch gekennzeichnet, daß** das erste und/oder das zweite Regelventil als ein Geschwindigkeitsbegrenzer gestaltet ist, so daß im Falle einer Eingangsdrehzahl des Getriebes oberhalb eines eingestellten Wertes die Zufuhr und Ableitung von Medium von dem ersten Regelventil zu der Kolben-Zylinder Einheit unterbrochen wird und das Übersetzungsverhältnis des Getriebes sich nur graduell ändern kann.

12. Stufenloses Getriebe gemäß Anspruch 3, 5, 7, 8, 9, 10 oder 11, **dadurch gekennzeichnet, daß** eines oder mehrere der folgenden Signale, oder davon abgeleiteten Signale einem UND-Gatter zugeführt werden, das mit der ON/OFF Magnetspule (30) verbunden ist, und mit entsprechenden, einzustellenden Werten verglichen werden:
einem Erregersignal für das erste Regelventil, der Fahrzeuggeschwindigkeit und der Eingangsdrehzahl des Getriebes.

13. Stufenloses Getriebe gemäß Anspruch 12, **dadurch gekennzeichnet, daß** an die Magnetspule (30) ein Signal von einem set/reset-Flipflop übertragen wird, wobei das Flipflop Eingänge für ein Maß für die Fahrzeuggeschwindigkeit und für eine Differenz zwischen der gewünschten und der gemessenen Eingangsdrehzahl des Getriebes aufweist.

14. Stufenloses Getriebe gemäß einem der vorhergehenden Ansprüche, **dadurch gekennzeichnet, daß** das Getriebe so ausgelegt ist, daß, wenn die Differenz zwischen der gewünschten und der gemessenen Eingangsdrehzahl des Getriebes einen vorbestimmten Wert übersteigt und die Fahrzeuggeschwindigkeit unter einen vorbestimmten Wert sinkt, das Übersetzungsverhältnis im wesentlichen konstant gehalten wird.

15. Stufenloses Getriebe gemäß Anspruch 14, **dadurch gekennzeichnet, daß** das Übersetzungsverhältnis veränderlich wird, wenn bei einem konstanten Übersetzungsverhältnis nach einem Nothalt der gewünschte Wert und der gemessenen Wert der Eingangsdrehzahl des Getriebes wieder etwa gleich sind.

16. Stufenloses Getriebe gemäß einem der vorhergehenden Ansprüche, **dadurch gekennzeichnet, daß** das Getriebe so ausgelegt ist, daß, wenn die Eingangsdrehzahl des Getriebes einen einstellbaren Wert übersteigt, das Übersetzungsverhältnis des Getriebes im wesentlichen konstant gehalten wird bis die Drehzahl wieder unter den eingestellten Wert gefallen ist.

17. Stufenloses Getriebe gemäß einem der vorhergehenden Ansprüche, **dadurch gekennzeichnet, daß** das Getriebe so ausgelegt ist, daß das Übersetzungsverhältnis durch Fuzzy-Logic und/oder unter Verwendung von neuralen Netzwerken beeinflußt wird.

## Revendications

1. Transmission variable en continu, en particulier pour un véhicule à moteur équipé d'un moyen de commande pour définir le rapport de transmission de la transmission, ledit moyen de commande :
- comprenant une unité électronique de commande (25) prévue avec des entrées pour des signaux correspondant au moins à la vitesse du véhicule et au rapport actuel de transmission, et
- étant construit de manière qu'à partir de ces signaux dans certaines conditions de fonctionnement, un rapport de transmission essentiellement constant soit maintenu tandis que la vitesse d'entrée de la transmission varie,
- ladite transmission variable en continu étant équipée d'une poulie primaire (3, 4) et d'une poulie secondaire (6, 7) entre lesquelles est installée une courroie d'entraînement sans fin (8), chaque poulie comprenant deux parties de poulie, dont une est mobile dans la direction axiale par rapport à l'autre partie de poulie,
- ledit moyen de commande comprenant encore un système hydraulique de commande pour ajuster la position relative de chaque partie de poulie mobile au moyen d'un ensemble à piston et cylindre (9, 10 et 11, 12) et d'un ensemble de vannes de commande comprenant une première vanne de commande (21;41) pour commander l'entrée et la sortie d'un milieu à au moins un ensemble à piston et cylindre,
caractérisé en ce que
- ladite unité électronique de commande (25) comprend une boucle à rétroaction qui, dans des conditions de fonctionnement spécifiées, est connectée à un circuit arithmétique (51) recevant en entrées lesdits signaux correspondant à ladite vitesse du véhicule et audit rapport actuel de la transmission, et délivrant une vitesse d'entrée désirée (Np(DV)) de la transmission,
- ladite unité électronique de commande (25) délivre un signal basé sur ladite vitesse d'entrée désirée (Np(DV)) et sur une vitesse d'entrée mesurée (Np(MV)) de la transmission, afin de régler la première vanne de commande (21;41),
- ladite première vanne de commande (21;41) est couplée à l'ensemble à piston et cylindre de la poulie primaire, et étudiée de manière que dans lesdites conditions de fonctionnement spécifiées, la vanne maintienne une quantité essentiellement constante du milieu dans ledit ensemble à piston et cylindre afin de maintenir ledit rapport de transmission essentiellement constant.

2. Transmission variable en continu selon la revendication 1, dans laquelle ladite première vanne de commande est réglée dans une condition de compensation des fuites.

3. Transmission variable en continu selon la revendication 1, comprenant une seconde vanne de commande (27) montée sur une conduite hydraulique (13) entre la première vanne de commande (21) et l'ensemble à piston et cylindre (9,10) de la poulie primaire qui a pour fonction de fermer ladite conduite hydraulique, et un solénoïde MARCHE/ARRET (30) pour commander ladite seconde vanne de commande dans d'autres conditions de fonctionnement spécifiées.

4. Transmission variable en continu selon la revendication 3, dans laquelle lesdites autres conditions spécifiées de fonctionnement, sont définies par des trajets en courbes et/ou pentes.

5. Transmission variable en continu selon la revendication 3, dans laquelle lesdites autres conditions de fonctionnement spécifiées sont définies par un arrêt d'urgence et une vitesse d'emballement de la transmission.

6. Transmission variable en continu selon les revendications 1 et 2, dans laquelle un ou plusieurs des signaux suivants, employés pour définir lesdites conditions de fonctionnement spécifiées sont appliqués auxdits moyens de commande : position de l'accélérateur, vitesse de l'accélérateur, vitesse du véhicule, vitesse du moteur, vitesse d'entrée de la transmission, force de freinage, position de la pédale de frein, accélérations transversale et/ou longitudinale, gradients, commande du conducteur, position de la direction et position des roues du véhicule.

7. Transmission variable en continu selon l'une des revendications 3 ou 5, dans laquelle ladite seconde vanne de commande (27) et/ou ledit solénoïde MARCHE/ARRET (30) sont équipés d'un modulateur par largeur d'impulsions (PWM).

8. Transmission variable en continu selon les revendications 3, 5 ou 7, dans laquelle ladite première et/ou ladite seconde vanne de commande a la forme d'une soupape de sûreté, de manière que s'il y a un défaut d'alimentation, l'application et/ou la sortie du milieu par rapport à la première et/ou à la seconde vanne de commande vers l'ensemble à piston et cylindre soit interrompue et que le rapport de transmission de la transmission ne puisse varier que progressivement.

9. Transmission variable en continu selon l'une quelconque des revendications 3, 5, 7 ou 8, dans laquelle ladite première et/ou ladite seconde vanne de commande est construite sous forme d'un bloc de renversement de marche afin que pour des vitesses en avant du véhicule, dépassant une valeur prédéterminée, un quelconque signal de commande pour activer un mécanisme de renversement de marche soit bloqué.

10. Transmission variable en continu selon la revendication 9, dans laquelle un signal de commande pour activer un mécanisme de renversement de marche peut être acheminé à travers ladite seconde vanne de commande (27), et dans lequel ladite seconde vanne de commande est prévue avec une entrée pour un signal correspondant à la vitesse du véhicule, ou servant de mesure de celle-ci.

11. Transmission variable en continu selon les revendications 3, 5, 7, 8, 9 ou 10, dans laquelle ladite première et/ou ladite seconde vanne de commande est construite sous forme d'un limiteur de vitesse de façon que dans le cas où la vitesse d'entrée de la transmission dépasse une valeur fixée, l'application et la sortie du r.ilieu entre la première vanne de commande et l'ensemble à piston et cylindre soient interrompues et que le rapport de transmission de la transmission ne puisse varier que progressivement.

12. Transmission variable en continu selon les revendications 3, 5, 7, 8, 9, 10 ou 11, dans laquelle un ou plusieurs des signaux ou dérivés des signaux suivants sont appliqués à une porte ET connectée pour ledit solénoïde MARCHE/ARRET (30) et sont comparés à des valeurs correspondantes à régler : un signal d'excitation pour la première vanne de commande, la vitesse du véhicule et la vitesse d'entrée de la transmission.

13. Transmission variable en continu selon la revendication 12, dans laquelle un signal est appliqué audit solénoïde (30) depuis une bascule de positionnement/réinitialisation, la bascule étant dotée d'entrées pour une mesure de la vitesse du véhicule et d'une différence entre la vitesse d'entrée désirée et la vitesse d'entrée mesurée de la transmission.

14. Transmission variable en continu selon l'une quelconque des revendications précédentes, dans laquelle la transmission est étudiée de manière à maintenir le rapport de transmission essentiellement constant si la différence entre la valeur désirée et la valeur mesurée de la vitesse d'entrée de la transmission dépasse une valeur prédéterminée et si la vitesse du véhicule tombe au-dessous d'une valeur prédéterminée.

15. Transmission variable en continu selon la revendication 14, dans laquelle le rapport de transmission devient variable si, pour un rapport de transmission constant après un arrêt d'urgence, la valeur désirée et la valeur mesurée de la vitesse d'entrée de la transmission sont à nouveau sensiblement égales.

16. Transmission variable en continu selon l'une quelconque des revendications précédentes, dans laquelle la transmission est étudiée de manière à maintenir le rapport de transmission de la transmission essentiellement constant si la vitesse d'entrée de la transmission dépasse une valeur définissable jusqu'à ce que ladite vitesse soit tombée à nouveau au-dessous de la valeur finie.

17. Transmission variable en continu selon l'une quelconque des revendications précédentes, dans laquelle la transmission est étudiée de manière à ce que le rapport de transmission soit influencé en employant des réseaux à logique floue et/ou des réseaux du type neural.
